# EUROPÄISCHE PATENTSCHRIFT

(11) **EP 2 573 634 B1**
(45) Veröffentlichungstag und Bekanntmachung des Hinweises auf die Patenterteilung: **26.03.2014**
(21) Anmeldenummer: 11401596.9
(22) Anmeldetag: 20.09.2011
(51) Int. Cl.: G05B 19/042

(54) **Verfahren zum Betrieb eines Haushaltsgeräts und System mit einem solchen Haushaltsgerät**
Method for operating a household appliance and system with such an appliance
Procédé de fonctionnement d'un appareil ménager et système avec un tel appareil

(43) Veröffentlichungstag der Anmeldung: 27.03.2013
(73) Patentinhaber: Miele & Cie. KG, 33332 Gütersloh (DE)
(72) Erfinder: Arnold, Stephan, Dr., 38518 Gifhorn (DE); Herden, Rudolf, 33442 Herzebrock-Clarholz (DE); Hokamp, Ernst, 33330 Gütersloh (DE); Meyer, Annette, 26919 Brake (DE); Schrutek, Christian, 33729 Bielefeld (DE); Schöning, Achim, 33613 Bielefeld (DE); Westerheide, Ralf, 49176 Hilter (DE)

(56) Entgegenhaltungen:
- WO-A1-2011/103680
- WO-A2-2006/083416
- DE-A1- 19 908 164

## Beschreibung

Die vorliegende Erfindung betrifft ein Verfahren zum Betreiben eines Haushaltsgerätes, wie Waschautomat, Trockner, Geschirrspüler, Gargerät oder Getränkebereiter,
wobei das Haushaltsgerät einen Speicher mit einem Steuerungsprogramm und zumindest einem vom Steuerungsprogramm ausführbaren Haushaltsgerätprogramm sowie eine Verarbeitungseinheit zur Ausführung des Steuerungsprogramms umfasst, und ein System mit einem solchen Haushaltsgerät.

Haushaltsgeräte sind an sich bekannt. Jedes Haushaltsgerät weist zumindest ein Haushaltsgeräteprogramm, üblicherweise eine Mehrzahl von Haushaltsgeräteprogrammen, auf. Bisher sind solche Haushaltsgeräteprogramme häufig in Hardware ausgeführt, nämlich z. B. als sogenanntes Programmschaltwerk. Die Implementation von Haushaltsgeräteprogrammen kommt genauso in Software in Betracht und in Software ausgeführte Haushaltsgeräteprogramme bieten zusätzliche Flexibilität, soweit es z.B. um deren Änderung geht oder soweit es darum geht, im Haushaltsgerät andere oder zusätzliche Haushaltsgeräteprogramme vorzusehen.

Solche in Software implementierten Haushaltsgeräteprogramme können bei der Fertigung des Haushaltsgerätes in einem von diesem umfassten Speicher abgelegt werden und stehen dort zur unmittelbaren oder mittelbaren Ausführung durch eine Verarbeitungseinheit in Form von oder nach Art eines Mikroprozessors zur Verfügung. Üblicherweise ist zur Ausführung von Haushaltsgeräteprogrammen im Speicher des Haushaltsgerätes ein Steuerungsprogramm vorgesehen, das durch die Verarbeitungseinheit ausgeführt wird und das im Betrieb ein von einem Benutzer ausgewähltes Haushaltsgeräteprogramm ausführt.

Ausgehend von einer Auslieferungssituation mit einem oder mehreren in Software implementierten Haushaltsgeräteprogrammen entsteht beim Benutzer des Haushaltsgerätes häufig das Bedürfnis, den Funktionsumfang des Haushaltsgerätes seinen jeweiligen Bedürfnissen anpassen zu können und in diesem Zusammenhang eine auf die jeweilige Anwendungssituation abgestellte Art und Anzahl von Haushaltsgeräteprogrammen auf dem jeweiligen Gerät zur Verfügung zu haben. Dafür kommt in Betracht, dass ein Servicetechniker mit einer entsprechenden Hardware, z. B. einem Programmiergerät oder dergleichen, neue Haushaltsgeräteprogramme zum Haushaltsgerät transferiert oder bestehende Haushaltsgeräteprogramme löscht oder modifiziert. Oftmals möchte ein Benutzer aber nicht einen Weg gehen, der die Einschaltung eines Servicetechnikers erfordert oder es soll eine gewünschte Änderung so bald wie möglich verfügbar sein, ohne an den Terminplan und die Geschäftszeiten von derartigem Personal gebunden zu sein.

Aus der WO 2011/103680 A1 ist es bekannt, mittels eines mobilen Gerätes mittels Internet Software herunterzuladen, die danach vom mobilen Gerät in das Haushaltsgerät übertragen werden kann, um allgemein ein Programmupdate durchzuführen.

Aus der WO 2006 /083416 A2 ist ein Verfahren bekannt, bei dem ein Unterhaltungsgerät aus der Ferne mit einem mobilen Gerät gesteuert werden kann. Hierzu wird ein RFID-Zeichen zum Identifizieren des Unterhaltungsgerätes ausgelesen, damit Befehle für das identifizierte Unterhaltungsgerät vom mobilen Gerät ausgehend entsprechend übersetzt und dem Unterhaltungsgerät zugeführt werden können.

Aus der DE 199 08 164 A1 ist allgemein ein Verfahren zum Einrichten eines Haushaltsgerätes bekannt, bei dem mittels einer sogenannten Datenfernverbindung Programmdaten in die Steuereinrichtung des Haushaltsgerätes geladen werden können.

Eine Aufgabe der vorliegenden Erfindung besteht entsprechend darin, ein Verfahren zum Betrieb eines Haushaltsgerätes und ein System mit einem solchen Haushaltsgerät anzugeben, das eine besonders einfache und flexible Möglichkeit zur Aktualisierung oder zur Ergänzung von Haushaltsgeräteprogrammen im Speicher eines Haushaltsgeräte bietet.

Diese Aufgabe wird erfindungsgemäß mit einem Verfahren mit den Merkmalen des Anspruchs 1 gelöst. Dazu ist bei dem Verfahren zum Betreiben eines Haushaltsgeräte, wobei der Waschautomat einen Speicher mit einem Steuerungsprogramm und zumindest einem von dem Steuerungsprogramm ausführbaren Haushaltsgeräteprogramm sowie eine Verarbeitungseinheit zur Ausführung des Steuerungsprogramms umfasst, vorgesehen, dass mit einem zumindest eine Kamera umfassenden mobilen Gerät eine am Haushaltsgeräte angeordnete Kennung des Haushaltsgeräte erfasst wird, und dass mit der Kennung und mit dem mobilen Gerät ein Zugriff auf eine im Internet oder allgemein per Datenkommunikation erreichbare Datenbasis erfolgt sowie ein oder mehrere Haushaltsgeräteprogramme in der Datenbasis ausgewählt und zum mobilen Gerät übertragen werden und dass das oder jedes zum mobilen Gerät übertragene Haushaltsgeräteprogramm in den Speicher des Haushaltsgerätes transferiert wird.

Der Vorteil der Erfindung besteht darin, dass ein mobiles Gerät, wie z.B. ein Mobiltelefon, ein sogenannter Handheld-Computer, ein Laptop, usw. als Schnittstelle zwischen dem Haushaltsgeräte und einer im Internet bereitgehaltenen Datenbasis für Haushaltsgeräteprogramme fungiert. Derartige mobile Geräte sind in vielen Haushalten vorhanden, so dass ein Benutzer eines Haushaltsgeräte ohne zusätzliche Anschaffungen eine Möglichkeit erhält, auf im Internet bereitgestellte Haushaltsgeräteprogramme zuzugreifen, um diese für eine Übertragung zu seinem Haushaltsgeräte auszuwählen. Der Zugriff auf die Datenbasis mittels des mobilen Geräts erfolgt dabei spezifisch für die jeweiligen Haushaltsgeräte. Dazu wird mit dem mobilen Gerät eine Kennung des Haushaltsgeräts erfasst. Zur Erfassung einer solchen Kennung kommt eine üblicherweise von Mobilfunkgeräten als Beispiel für eine Kategorie mobiler Geräte umfasste Kamera, in Betracht. Andere, entsprechende Möglichkeiten zur Erfassung einer Kennung des Haushaltsgeräte bestehen z.B. in Form eines sogenannten RFID-Systems, bei dem der Waschautomat einen Transponder aufweist und das mobile Gerät zumindest auch als RFID-Lesegerät fungiert. Auch lasergestützte Scanner können diese Aufgabe übernehmen. Die vorliegende Beschreibung wird ohne Verzicht auf eine weitergehende Allgemeingültigkeit für eine Erfassung einer Kennung mit einer Kamera des mobilen Geräts fortgesetzt. Dabei sind andere Datenerfassungsmittel stets impliziert.

Zur Identifikation des Haushaltsgeräte wird mit der Kamera der Waschautomat oder ein signifikanter Teil des Haushaltsgeräte, z.B. das Bedienfeld mit einer üblicherweise charakteristischen Anordnung von Anzeige- und Bedienelementen, oder aber ein Bereich des Haushaltsgeräte, der eine üblicherweise an dessen Außenseite vorgesehene Typenkennung oder dergleichen aufweist, usw. aufgenommen und durch Interpretation der so erfassten Bilddaten eine den Haushaltsgeräte identifizierende Kennung abgeleitet. In Abhängigkeit bzw. nur beim Vorhandensein dieser Kennung und mit dem mobilen Gerät erfolgt sodann ein Zugriff auf eine im Internet erreichbare Datenbasis. In der Datenbasis werden ein oder mehrere Haushaltsgeräteprogramme ausgewählt und zum mobilen Gerät übertragen. Danach wird oder werden das eine oder alle heruntergeladenen Haushaltsgeräteprogramme in den Speicher des Haushaltsgeräts transferiert. Dort steht danach das neue oder geänderte Haushaltsgeräteprogramm zur Ausführung durch das Steuerungsprogramm zur Verfügung und im Zusammenhang mit dem Transfer eines Haushaltsgeräteprogramms in den Speicher oder im Wege eines vom Steuerungsprogramm ausgeführten Suchlaufs nach Haushaltsgerätprogrammen im Speicher wird dem Steuerungsprogramm ein neues Haushaltsgerätprogramm notifiziert, so dass dessen Auswahl durch eine Bedienhandhabe am Haushaltsgerät und die darauf folgende Ausführung auf dem bzw. im Haushaltsgerät möglich ist.

Der Vorteil der Erfindung besteht darin, dass mit der Verwendung eines mobilen Geräts, also z.B. eines Mobiltelefons, als Schnittstelle zwischen dem Haushaltsgerät und einer im Internet bereitgehaltenen Datenbasis mit Haushaltsgerätprogrammen der Benutzer bei einem etwaigen Wunsch, die auf seinem Haushaltsgerät vorgehaltenen Haushaltsgerätprogramme verändern oder ergänzen zu können, eine bisher nicht gekannte Flexibilität erhält. Der Benutzer ist dabei sogar vom Aufstellungsort des Haushaltsgerät unabhängig und kann, nachdem eine den Haushaltsgerät identifizierende Kennung erfasst ist, den Zugriff auf die Datenbasis und die Auswahl eines oder mehrerer Haushaltsgerätprogramme an einem ihm genehmen Ort vornehmen und dabei die dort angebotenen Haushaltsgerätprogramme in Ruhe vergleichen und schließlich ein oder mehrere Haushaltsgerätprogramme zur Übertragung auf das jeweilige mobile Gerät auswählen. Lediglich zum Transfer des oder jedes zum mobilen Gerät übertragenen Haushaltsgerätprogramms muss das mobile Gerät nochmals in die Nähe des Haushaltsgerät gebracht werden, damit eine für den Transfer notwendige kommunikative Verbindung zwischen mobilem Gerät und Waschautomat hergestellt werden kann.

Vorteilhafte Ausgestaltungen der Erfindung sind Gegenstand der abhängigen Ansprüche. Dabei verwendete Rückbeziehungen weisen auf die weitere Ausbildung des Gegenstandes des unabhängigen Anspruches durch die Merkmale des jeweiligen Unteranspruches hin; sie können auch selbständige Erfindungen enthalten, die eine von den Gegenständen der vorhergehenden Ansprüche unabhängige Gestaltung aufweisen und sind nicht als ein Verzicht auf die Erzielung eines selbständigen, gegenständlichen Schutzes für deren Merkmale zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Eine Ausführungsform des Verfahrens basiert darauf, dass die Kennung des Haushaltsgerät als Barcode oder als sogenannte Data Matrix oder dergleichen vorliegt und zwar an einer mit dem mobilen Gerät zugänglichen Stelle des Haushaltsgerät, also z.B. an einer von dessen Außenseiten. Eine solche Kennung kann dann mit dem mobilen Gerät, nämlich dessen Kamera, erfasst werden. Durch Auswertung der so gewonnenen Bilddaten ist eine Interpretation der Kennung und eine Umsetzung in ein sich zur Weitergabe, also insbesondere zur Anmeldung bei der im Internet verfügbaren Datenbasis, eignendes Datum möglich. Die Verwendung eines Barcodes als Basis für die Kennung hat den Vorteil, dass Haushaltsgerät üblicherweise bereits im Fertigungsprozess oder bei der Endkontrolle, zumindest jedoch bei Vorbereitung für den Verkauf mit einer solchen oder ähnlichen Kennung versehen werden, so dass für diese Ausgestaltung des Verfahrens keine besonderen Maßnahmen hinsichtlich des Haushaltsgerät getroffen werden müssen. Nachdem mobile Geräte, wie z.B. Mobilfunktelefone, üblicherweise eine Kamera und Mittel zur Verarbeitung der mit der Kamera aufgenommenen Bilddaten aufweisen, braucht auch die Konfiguration solcher mobiler Geräte nicht geändert werden. Es reicht demnach aus, wenn eine Betriebssoftware des mobilen Geräts dahingehend geändert wird, dass die aufgenommenen Bilddaten so verarbeitet werden können, dass die jeweilige Kennung interpretierbar ist und daraus ein zur Weitergabe geeignetes Datum erzeugt werden kann.

Wenn die Kennung oder ein aufgrund der Kennung gebildetes Datum - beide Begriffe werden im Folgenden auch synonym verwendet - in dem mobilen Gerät dauerhaft gespeichert wird und einen wiederholten Zugriff auf die Datenbasis erlaubt, wird der Nutzer eines Haushaltsgerät von der Notwendigkeit enthoben, für jeden Zugriff auf die im Internet bereitgehaltene Datenbasis die Kennung erneut erfassen zu müssen. Der Benutzer des Haushaltsgerät kann auf dieser Basis mit seinem mobilen Gerät quasi regelmäßig, z.B. auch auf Reisen oder wenn sonst Muße besteht, auf die im Internet vorgehaltene Datenbasis zugreifen, um zu überprüfen, ob für seinen Haushaltsgerät evtl. neue oder geänderte Haushaltsgerätprogramme zur Verfügung stehen.

Zum Transfer eines zum mobilen Gerät übertragenen Haushaltsgerätprogramms in den Speicher des Haushaltsgeräts wird eine temporäre leitungslose oder leitungsgebundene kommunikative Verbindung zwischen dem mobilen Gerät und dem Haushaltsgerät hergestellt. Dies erlaubt einen Zugriff des mobilen Geräts auf den Haushaltsgerät und dessen Speicher. Das Steuerungsprogramm im Waschautomat erkennt den Anschluss des mobilen Geräts und führt eine Prüfung durch, als deren Ergebnis die Kommunikation mit dem mobilen Gerät entweder erlaubt oder abgewiesen wird. Wenn die Kommunikation mit dem mobilen Gerät erlaubt werden soll, beginnt der Transfer der Daten mindestens eines Haushaltsgerätprogramms zum Haushaltsgerät und dessen Steuerungseinrichtung. Unter Kontrolle der dort ausgeführten Steuerungssoftware erfolgt das Ablegen der Daten des jeweiligen Haushaltsgerätprogramms im Speicher der Steuerungseinrichtung. Das Steuerungsprogramm überwacht dabei die Verwendung von im Speicher gebildeten Speicherbereichen, so dass ein neues Haushaltsgerätprogramm nur in einen nicht belegten oder zumindest nur in einen zwar von einem Haushaltsgerätprogramm belegten, aber nicht mehr verwendeten Haushaltsgerätprogramm belegten Speicherbereich transferiert wird. Das Steuerungsprogramm erkennt, z.B. anhand einer dafür vorgesehenen Kennung, die ggf. um eine Revisionsnummer oder dergleichen ergänzt ist, gleiche oder gleichartige Haushaltsgerätprogramme, so dass eine Ausführung möglich ist, bei der ein neues Haushaltsgerätprogramm ein vorangehendes älteres Haushaltsgerätprogramm ersetzt. In gleicher Weise kann auch vorgesehen sein, dass ein Haushaltsgerätprogramm, zu dem bereits im Speicher des Haushaltsgerät ein älteres Pendant besteht, zunächst nur in einen nicht belegten oder sonst verfügbaren Speicherbereich transferiert wird und das zu ersetzende ältere Haushaltsgerätprogramm im Speicher erst dann gelöscht wird oder der jeweilige Speicherbereich erst dann als wieder verfügbar markiert wird, wenn der Transfer des neuen Haushaltsgerätprogramms erfolgreich abgeschlossen ist. Zur Überwachung des Transfers der Daten eines Haushaltsgerätprogramms kommen an sich bekannte Verfahren in Betracht. So kann bei der kommunikativen Verbindung zwischen mobilem Gerät und Waschautomat bereits ein Protokoll zum Einsatz kommen, das Datenübertragungsfehler aufdeckt und im Falle solcher Fehler eine wiederholte Übertragung, ggf. eine teilweise wiederholte Übertragung veranlasst. Zusätzlich oder alternativ kann vorgesehen sein, dass das Haushaltsgerätprogramm mit einer Prüfsumme versehen ist und dass nach dem Transfer des Haushaltsgerätprogramms mit einem entsprechenden Algorithmus über das transferierte Haushaltsgerätprogramm ein Vergleichswert gebildet und mit der Prüfsumme verglichen wird. Ein transferiertes Haushaltsgerätprogramm wird nur dann als ordnungsgemäß transferiert und verwendbar markiert, wenn Prüfsumme und Vergleichswert übereinstimmen oder zumindest ausreichend übereinstimmen.

Bei einer Ausführungsform des Verfahrens kommt in Betracht, dass zur kommunikativen Verbindung zwischen mobilem Gerät und Waschautomat der Waschautomat und das mobile Gerät mit einem Datenkabel verbunden werden. Die Verwendung eines Datenkabels und die damit mögliche leitungsgebundene Kommunikation haben den Vorteil einer vergleichsweise sicheren Datenübertragung, die eher unbeeinflusst von elektromagnetischen Feldern oder dergleichen ist.

Bei einer alternativen Ausführungsform des Verfahrens ist vorgesehen, dass zur kommunikativen Verbindung zwischen mobilem Gerät und Waschautomat mit dem Waschautomat eine Sender-Empfänger-Kombination zur leitungslosen oder sogenannten drahtlosen Datenübertragung verbunden wird und dass der Waschautomat über die Sender-Empfänger-Kombination mit dem mobilen Gerät leitungslos kommunikativ verbunden wird. Eine solche Ausführungsform hat den Vorteil, dass auf Seiten des mobilen Geräts keine Anschlussstelle bzw. Steckverbinder oder sonstige Kontaktierungsmittel für ein Datenkabel oder dergleichen benötigt wird und dass die Kommunikation mit der Sender-Empfänger-Kombination durch Verwendung einer entsprechenden Sender-Empfänger-Kombination des mobilen Geräts erfolgen kann, die dieses, speziell als Mobilfunkgerät, normalerweise ohnehin aufweist. Die Verwendung der Sender-Empfänger-Kombination hat zudem den Vorteil, dass diese auch über längere Zeit mit dem Haushaltsgerät verbunden sein oder als fester Bestandteil in dem Haushaltsgerät integriert sein kann. Selbst wenn die Sender-Empfänger-Kombination nicht in den Haushaltsgerät integriert ist und vom Benutzer am Haushaltsgerät angebracht werden muss, besteht ohne Weiteres die Möglichkeit, eine solche Sender-Empfänger-Kombination an einer nicht sichtbaren Seite des Haushaltsgerät, z.B. an dessen Rückseite, anzubringen, so dass die normale Verwendung des Haushaltsgerät durch die Sender-Empfänger-Kombination nicht gestört wird und gleichzeitig der jederzeitige Zugriff auf den Haushaltsgerät mit dem mobilen Gerät möglich bleibt.

Insgesamt betrifft die Erfindung auch ein System mit einem Haushaltsgerät und einem mobilen Gerät, wobei Waschautomat und mobiles Gerät Mittel zur Ausführung des Verfahrens wie hier und nachfolgend beschrieben umfassen. Als Mittel zur Ausführung des Verfahrens ist sowohl auf Seiten des Haushaltsgerät wie auf Seiten des mobilen Geräts vor allem eine Verarbeitungseinheit in Form von oder nach Art eines Mikroprozessors und ein durch diese Verarbeitungseinheit ausführbares Steuerungsprogramm bzw. Computerprogramm zu nennen, mit dem die jeweiligen Verfahrensschritte implementiert sind und bei dessen Ausführung das Verfahren oder eines seiner Ausgestaltungen realisiert wird.

Im Weiteren betrifft die Erfindung damit auch ein derartiges System mit einem mit dem Haushaltsgerät und dem mobilen Gerät verbindbaren Datenkabel und/oder einer mit dem Haushaltsgerät verbindbaren Sender-Empfänger-Kombination zur kommunikativen Verbindung von Waschautomat und mobilem Gerät. Das mobile Gerät fungiert hierbei funktionell als ein Übertragungsmittel oder Medium zwischen Waschautomat und der im Internet bereitgehaltenen Datenbasis. Heute übliche mobile Geräte, wie z.B. Mobilfunktelefone, Notebook-Computer, PDAs, usw. weisen üblicherweise bereits eine Funktionalität zum Zugriff auf das Internet auf, so dass diese auch für das hier und nachfolgend beschriebene Verfahren verwendbar ist und sich damit das mobile Gerät als Bestandteil des Systems eignet. Eine kommunikative Verbindung zwischen Waschautomat und mobilem Gerät ist dagegen nicht ohne Weiteres möglich, so dass das System bei einer speziellen Ausführungsform entweder ein Datenkabel oder eine an das Haushaltsgerät anschließbare Sender-Empfänger-Kombination umfasst, mit dem bzw. mit der eine solche kommunikative Verbindung möglich ist. Insbesondere eignen sich als mobiles Gerät sogenannte Smart-Phones, die eine Kamera und eine spezielle Anwendung, ein sogenanntes App, zur Bereitstellung der kommunikativen Verbindung mit dem Haushaltgerät und zur Organisation bzw. zur Durchführung der Datenübertragung.

Die oben genannte Aufgabe wird auch mit einem Haushaltsgerät und einem mobilen Gerät gelöst, der bzw. das nach dem Verfahren wie hier und im Folgenden beschrieben arbeitet und dazu Mittel zur Durchführung des Verfahrens umfasst. Als mobiles Gerät eignet sich dabei besonders ein sogenanntes Smartphone, auf dem sogenannte Applikationsprogramme (Apps) speziell für den oben genannten Datentransfer aufgespielt werden können, die dann schnell und unkompliziert für den Benutzer zur Bedienung bereitgestellt und angezeigt werden. Die Erfindung ist dabei bevorzugt in Software implementiert. Die Erfindung ist damit einerseits auch ein Computerprogramm mit durch einen Computer ausführbaren Programmcodeanweisungen und andererseits ein Speichermedium mit einem derartigen Computerprogramm sowie schließlich auch ein Waschautomat oder eine Steuereinrichtung eines Haushaltsgerät und ein mobiles Gerät, in dessen Speicher als Mittel zur Durchführung des Verfahrens und seiner Ausgestaltungen ein solches Computerprogramm geladen oder ladbar ist.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen. Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, die zum Beispiel durch Kombination oder Abwandlung von einzelnen in Verbindung mit den in der allgemeinen Beschreibung, der oder jeder Ausführungsform sowie den Ansprüchen beschriebenen und in den Zeichnungen enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten oder Verfahrensschrittfolgen führen. Es zeigen:
- Fig. 1: ein System mit einem Haushaltsgerät und einem mobilen Gerät zum Zugriff auf eine im Internet bereitgestellte Datenbasis,
- Fig. 2: eine Steuerungseinrichtung des Haushaltsgerät mit weiteren Details,
- Fig. 3: das mobile Gerät mit weiteren Details,
- Fig. 4: einen Ablauf des hier vorgeschlagenen Verfahrens,
- Fig. 5a, 5b:: alternative Möglichkeiten zur kommunikativen Verbindung von Waschautomat und mobilem Gerät und
- Fig. 6: ein Flussdiagramm des hier vorgeschlagenen Verfahrens.

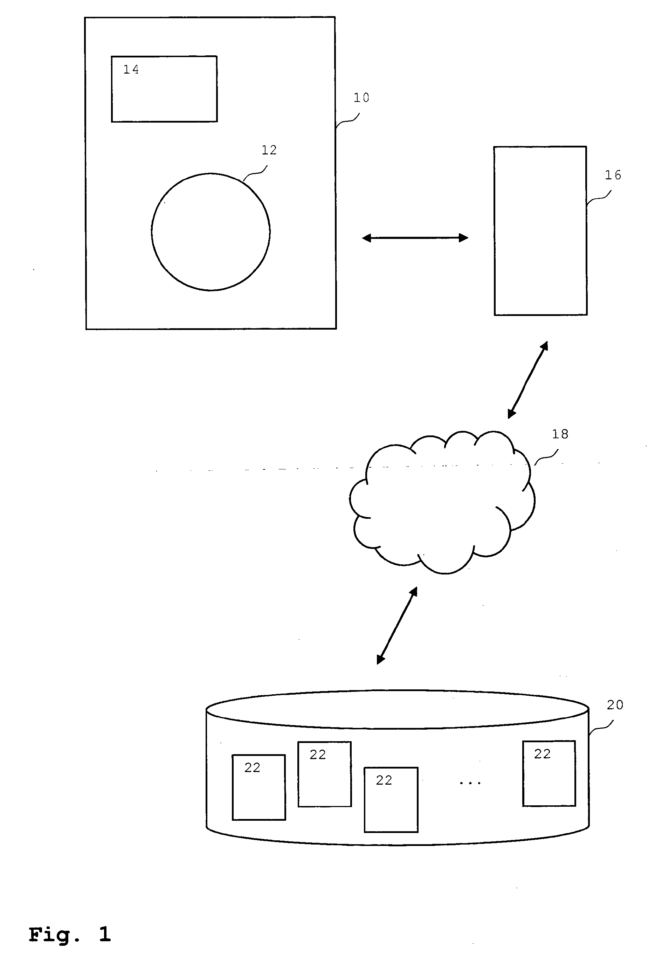

Figur 1 zeigt in schematisch vereinfachter Darstellung als Haushaltsgerät 10, einen Waschautomaten, der neben an sich bekannten Einheiten und Aggregaten in an sich bekannter Art und Weise eine Trommel 12, einen Trommelmotor, eine Heizung, eine Wasserzufuhr, usw. und darüber hinaus eine Steuerungseinrichtung 14 umfasst. Neben dem Haushaltsgerät 10 sind ein mobiles Gerät 16 und das als Wolke gezeigte Internet 18 dargestellt. Im Internet 18 bzw. mittels des Internets 18 ist eine Datenbasis 20 mit Haushaltsgerätprogrammen 22 oder sonstigen Daten für einen Haushaltsgerät 10 erreichbar. Die Doppelpfeile zwischen Waschautomat 10 und mobilem Gerät 16 einerseits sowie zwischen mobilem Gerät 16 und der Datenbasis 20 andererseits verdeutlichen eine kommunikative Verbindung. Die kommunikative Verbindung zwischen den genannten Einheiten kann auf leitungslosem Wege oder leitungsgebundenem Wege erfolgen. Bei dem mobilen Gerät 16 handelt es sich z.B. um ein Mobiltelefon, einen tragbaren Computer nach Art eines Laptops, Notebooks, Tablet-Computers, usw. oder einen tragbaren Computer nach Art eines sogenannten PDA (Personal Digital Assistant).

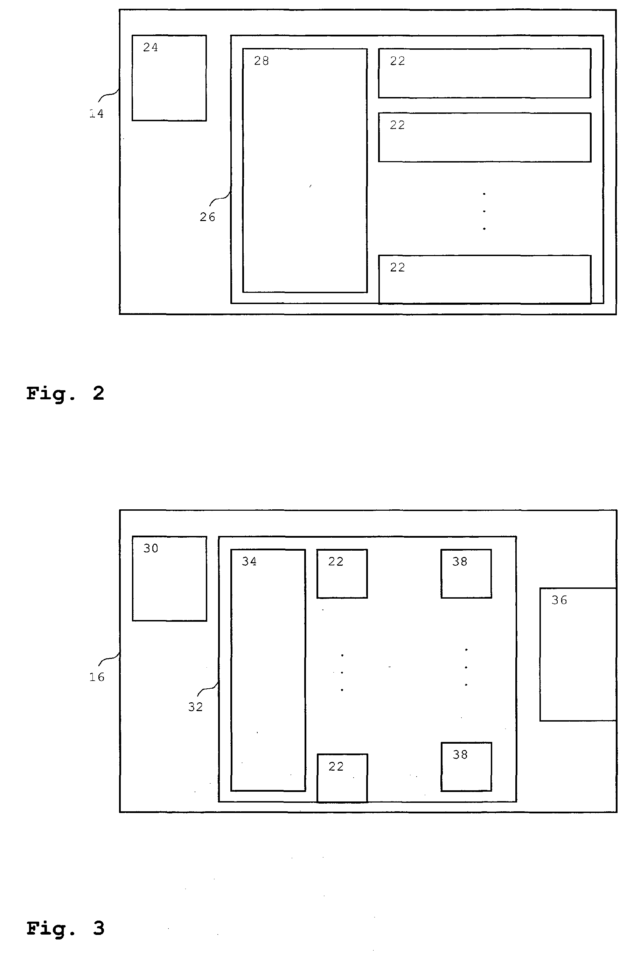

Figur 2 zeigt die Steuerungseinrichtung 14 des Haushaltgerätes 10 mit weiteren Details als Blockschaltbild. Danach umfasst diese in an sich bekannter Art und Weise eine Verarbeitungseinheit 24 in Form von oder nach Art eines Mikroprozessors sowie einen Speicher 26. In den Speicher 26 sind ein Steuerungsprogramm 28 und zumindest ein vom Steuerungsprogramm 28 ausführbares Haushaltsgerätprogramm 22 geladen. Beim Betrieb des Haushaltsgerätes 10 wird das Steuerungsprogramm 28 in üblicher Art und Weise durch die Verarbeitungseinheit 24 ausgeführt. Hierbei ist es zweckmäßig, dass das Steuerungsprogramm 28 nur allgemeingültige Programmteile umfasst und in einem reinen Lesespeicherbereich abgelegt ist. Der Speicherbereich der einzelnen Waschprogramme 22 ist als programmierbarer oder wiederbeschreibbarer Schreib-Lese-Speicher, beispielsweise Flash-Speicher, ausgebildet. Der Speicherberiech für das allgemeingültige Steuerungsprogramm 28 kann hierbei auch in den wiederbeschreibbaren Bereich abgelegt werden, dieser wird jedoch beim Update von einzelnen Waschprogrammen 22 nicht verändert oder überschrieben.

Figur 3 zeigt das mobile Gerät 16 mit weiteren Details als Blockschaltbild. Danach umfasst das mobile Gerät 16 ebenfalls eine Verarbeitungseinheit 30 sowie einen Speicher 32 wie oben für die Steuerungseinrichtung 14 beschrieben. In den Speicher 32 ist ein Betriebsprogramm 34 geladen und der Speicher 32 bietet Raum für ein oder mehrere aus der Datenbasis 20 (Figur 1) geladene Haushaltsgerätprogramme 22. Das mobile Gerät 16 umfasst als Beispiel für eine Vorrichtung zur Datenerfassung (Datenerfassungsmittel) weiterhin eine Kamera 36. Von der Kamera 36 aufgenommene Bilddaten 38 können ebenfalls in den Speicher 32 geladen werden. Die Bilddaten 38 sind mit dem Betriebsprogramm 34 ver- oder bearbeitbar und/oder interpretierbar, zum Beispiel mit Algorithmen der sogenannten Bildverarbeitung, um aus den Bilddaten Informationen zu gewinnen, die sich zur Weitergabe eignen.

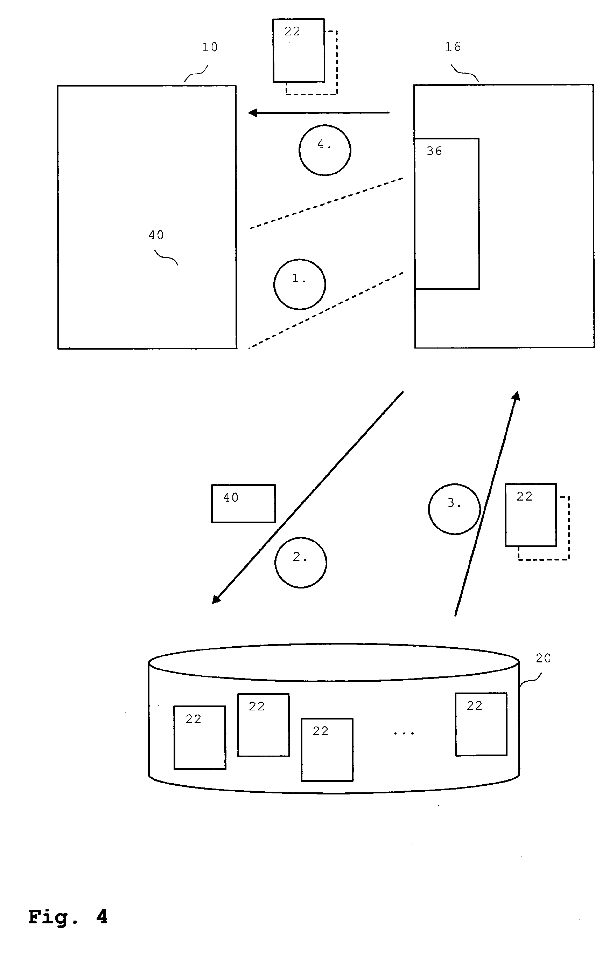

Figur 4 zeigt in schematisch vereinfachter Darstellung den Ablauf des Verfahrens. Danach wird in einem ersten Schritt (1.) mit der Kamera 36 des mobilen Geräts 16 eine Kennung 40 des Haushaltsgerätes 10, zum Beispiel ein Barcode an der Außenseite des Gerätes 10 oder in der Bedienanleitung, erfasst. Die mit der erfassten Kennung 40 resultierenden Bilddaten 38 (Figur 3) werden durch das mobile Gerät 16 mit geeigneten Bildverarbeitungsroutinen interpretiert. Mit einem ebenfalls als Kennung bezeichneten Datum, das auf der mit der Kamera 36 erfassten Kennung 40 basiert, also zum Beispiel dem numerischen Wert des Barcodes 40 darstellt, erfolgt ein Zugriff (2.) auf die im Internet 18 erreichbare Datenbasis 20. Dort werden ein oder mehrere der Kennung 40 zugeordnete Haushaltsgerätprogramme 22 ausgewählt und zum mobilen Gerät 16 übertragen (3.) und von dort schließlich in den Speicher 26 des Haushaltsgerät 10 transferiert (Schritt 4.). In einer zweckmäßigen Ausführung werden die für die entsprechende Kennung geeigneten Programme 22 nur zum Download angeboten, der Benutzer kann dann eine Auswahl für die tatsächlich zu übertragenen Programme 22 treffen.

Zusammen mit der Kennung 40 oder einem darauf basierenden Datum können weitere Daten zum Zugriff auf die Datenbasis 20 zu dieser übertragen werden. Die Kennung 40 dient der automatischen Bereitstellung von zu dem jeweiligen Haushaltsgerät 10 passenden Haushaltsgerätprogrammen 22. Die weiteren Daten können zur Authentifizierung des mobilen Geräts 16 vorgesehen sein, so dass nur berechtigte Zugriffe auf die Datenbasis 20 zu einer Möglichkeit zur Auswahl von Haushaltsgerätprogrammen 22 führen.

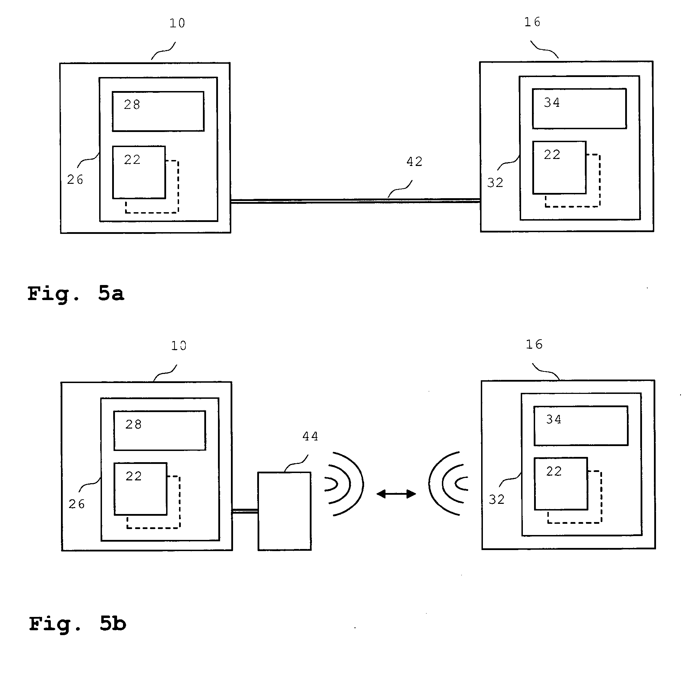

Figur 5a und 5b zeigen zwei Aspekte des Verfahrensschritts des Transfers von aus der Datenbasis 20 geladenen Haushaltsgerätprogrammen 22 vom mobilen Gerät 16 in den Speicher 26 des Haushaltsgerätes 10. Danach besteht zwischen dem mobilen Gerät 16 und dem Haushaltsgerät 10 entweder - gemäß der in Figur 5a dargestellten Ausführungsform - zumindest zeitweise eine kommunikative Verbindung über ein Datenkabel 42 oder es wird - gemäß der in Figur 5b dargestellten Ausführungsform - mit dem Waschautomat 10 eine Sender-Empfänger-Kombination 44 zur leitungslosen Datenübertragung verbunden, so dass der Waschautomat 10 über die Sender-Empfänger-Kombination 44 mit dem mobilen Gerät 16 leitungslos kommunikativ verbunden wird. Das mobile Gerät 16 umfasst als Mobiltelefon, Laptop-Computer mit WLAN-Anschluss, usw. eine eigene Sender-Empfänger-Kombination (nicht dargestellt), so dass die kommunikative Verbindung zwischen beiden Einheiten aufgebaut werden kann. Unabhängig davon, ob die kommunikative Verbindung auf leitungsgebundenem oder leitungslosem Weg hergestellt wird, kommt für die mit der kommunikativen Verbindung mögliche Datenübertragung grundsätzlich jedes bekannte und zukünftige bekannt werdende Datenübertragungsprotokoll in Betracht, z.B. Datenübertragungsprotokolle zur seriellen Datenübertragung nach den als RS-232, FireWire, Bluetooth oder Ethernet bekannten Standards. Die eigentlichen Kommunikationsvorgänge und die damit initiierte Datenübertragung werden durch die auf beiden Seiten beteiligten Computerprogramme, also das Steuerungsprogramm 28 auf Seiten des Haushaltsgerät 10 und das Betriebsprogramm 34 auf Seiten des mobilen Geräts, abgewickelt. Dazu sendet das Betriebsprogramm 34 z.B. eine Anfrage an das Steuerungsprogramm 28, auf das dieses normalerweise mit einer Erlaubnis zur Datenübertragung reagiert. Die übertragenen Daten werden in den Speicher 26 der Steuerungseinrichtung 14 (Figur 2) des Haushaltsgerät 10 übernommen. Nach einer Prüfung oder dergleichen, wenn die Daten als vollständiges und korrekt übertragenes Haushaltsgerätprogramm 22 erkannt sind, können die Daten als Haushaltsgerätprogramm 22 gekennzeichnet oder in einen speziellen Speicherbereich für Haushaltsgerätprogramme 22 übertragen werden. Dann steht das neue Haushaltsgerätprogramm 22 zur Ausführung durch das Steuerungsprogramm 28 zur Verfügung.

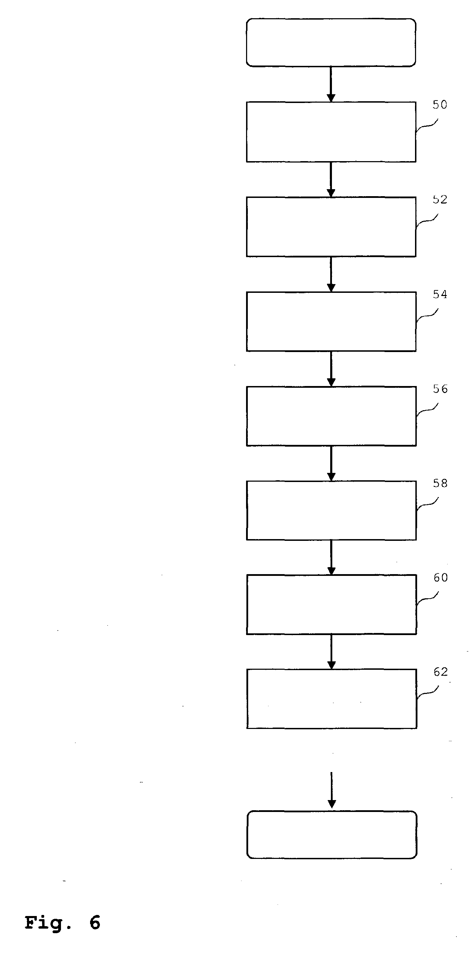

Abschließend stellt Figur 6 nochmals einige im Vordergrund stehende Aspekte des Verfahrens anhand eines schematisch vereinfachten Flussdiagramms dar. Danach wird zunächst (erster Funktionsblock 50) mit dem mobilen Gerät 16 und davon umfassten Mitteln, zum Beispiel dessen Kamera 36, eine Kennung 40 des Haushaltsgerät 10 aufgenommen. Soweit erforderlich wird diese Kennung 40 daraufhin interpretiert (zweiter Funktionsblock 52), zum Beispiel indem mit der Kamera 36 aufgenommene Bilddaten 38 mit Bildverarbeitungsalgorithmen umgesetzt und die in den Bilddaten 38 enthaltenen Informationen extrahiert werden. Das Ergebnis einer solchen Verarbeitung ist ein auf der Kennung 40 basierendes Datum, zum Beispiel der numerische Wert eines als Kennung 40 verwendeten Barcodes. Das auf der Kennung 40 basierende Datum wird ebenfalls als Kennung bezeichnet und - ggf. zusammen mit weiteren Daten, etwa zur Authentifizierung - an die im Internet 18 erreichbare Datenbasis 20 übermittelt (dritter Funktionsblock 54). Dabei meint die Übermittlung an die Datenbasis 20 stets, dass eine kommunikative Verbindung mit einem in der Fachterminologie auch als Server bezeichneten Rechner (nicht dargestellt) aufgenommen wird, auf dem die Datenbasis 20 vorgehalten wird oder der in sonstiger Weise Zugriff auf die Datenbasis 20 hat. Die übermittelte Kennung erlaubt auf Seiten der Datenbasis 20 eine Vorauswahl von für den jeweiligen, für das entsprechende Haushaltsgerät 10 geeigneten Haushaltsgerätprogrammen 22. In einem nächsten Schritt (vierter Funktionsblock 56) erfolgt damit im Rahmen des Zugriffs auf die Datenbasis 20 mit dem mobilen Gerät 16 eine Auswahl zumindest eines Haushaltsgerätprogramms 22 in der anhand der Kennung bereitgestellten Vorauswahl. Das oder jedes ausgewählte Haushaltsgerätprogramm 22 wird sodann zum mobilen Gerät 16 übertragen und zumindest temporär in dessen Speicher 32 abgelegt (fünfter Funktionsblock 58). Sobald eine kommunikative Verbindung zwischen dem mobilen Gerät 16 und dem Haushaltsgerät 10 besteht oder hergestellt ist, kann der Transfer des oder jedes Haushaltsgerätprogramms 22 in den Speicher 26 des Haushaltsgerät 10 erfolgen. Dazu erfolgt eine Übermittlung der von dem Haushaltsgerätprogramm 22 umfassten Daten (sechster Funktionsblock 60). Nachdem die Daten des Haushaltsgerätprogramms 22 in den Speicher 26 geladen sind, erfolgt eine Überprüfung (siebter Funktionsblock 62) und bei einem erfolgreichen Abschluss der Prüfung steht das neue Haushaltsgerätprogramm 22 zur Ausführung durch das Steuerungsprogramm 28 zur Verfügung.

Einzelne, im Vordergrund stehende Aspekte der hier vorgelegten Beschreibung lassen sich am Beispiel eines Waschautomaten damit kurz wie folgt zusammenfassen: Es wird ein Verfahren zum Betrieb eines Haushaltsgerätes, hier ein Waschautomat 10, wobei der Waschautomat 10 bzw. die Steuereinrichtung 14 einen Speicher 26 mit einem Steuerungsprogramm 28 und zumindest einem vom Steuerungsprogramm 28 ausführbaren Haushaltsgerät Programm 22 sowie eine Verarbeitungseinheit 24 zur Ausführung des Steuerungsprogramms 28 umfasst, angegeben, bei dem eine Kennung 40 des Waschautomaten 10 erfasst wird, bei dem mit der Kennung 40 und mit dem mobilen Gerät 16 ein Zugriff auf eine im Internet 18 erreichbare Datenbasis 20 erfolgt sowie ein oder mehrere Waschautomatenprogramme 22 ausgewählt und zum mobilen Gerät 16 übertragen werden und bei dem das oder jedes zum mobilen Gerät 16 übertragene Waschautomatenprogramm 22 in den Speicher 26 des Waschautomaten transferiert wird. Zur Erfassung der Kennung 40 kommt z.B. eine von einem Mobilfunktelefon als mobiles Gerät 16 normalerweise umfasste Kamera 36, aber auch jedes andere Datenerfassungsmittel, zum Beispiel ein Lesegerät für RFID-Daten, ein Laserscanner oder dergleichen, in Betracht. Jedenfalls wird der betreffende Waschautomat durch Erfassung der Kennung 40 eindeutig identifiziert und die Kennung 40 ist die Grundlage für eine Auswahl von für den Waschautomaten 10 passenden Waschautomatenprogrammen 22 in der im Internet 18 erreichbaren Datenbasis 20. Für die Verwendung bei einem Trockner umfassen die Haushaltsgeräteprogramme 22 entsprechend Trocknerprogramme oder Parameteroptionen. Für Gargeräte umfassen diese Programme 22 entsprechend sogenannte Garprogramme oder Menu-Garprogramme, für Getränkevollautomaten oder Kaffeevollautomaten entsprechend Bereitungsprogramme für Getränke.

### Bezugszeichenliste

- 10: Waschautomat, Haushaltsgerät
- 12: Trommel
- 14: Steuerungseinrichtung
- 16: mobiles Gerät
- 18: Internet
- 20: Datenbasis
- 22: Waschautomatenprogramme, Haushaltsgerätprogramme
- 24: Verarbeitungseinheit
- 26: Speicher
- 28: Steuerungsprogramm
- 30: Verarbeitungseinheit (des mobilen Geräts)
- 32: Speicher (des mobilen Geräts)
- 34: Betriebsprogramm (des mobilen Geräts)
- 36: Kamera
- 38: Bilddaten
- 40: Kennung
- 42: Datenkabel
- 44: Sender-Empfänger-Kombination
- 50: erster Funktionsblock
- 52: zweiter Funktionsblock
- 54: dritter Funktionsblock
- 56: vierter Funktionsblock
- 58: fünfter Funktionsblock
- 60: sechster Funktionsblock
- 62: siebter Funktionsblock

## Patentansprüche

1. Verfahren zum Betreiben eines Haushaltsgerätes (10), wie Waschautomat, Trockner, Geschirrspüler, Gargerät oder Getränkebereiter,
wobei das Haushaltsgerät (10) einen Speicher (26) mit einem Steuerungsprogramm (28) und zumindest einem vom Steuerungsprogramm (28) ausführbaren Haushaltsgerätprogramm (22) sowie eine Verarbeitungseinheit (24) zur Ausführung des Steuerungsprogramms (28) umfasst,
**dadurch gekennzeichnet,**
**dass** mit einem zumindest eine Kamera (36) zur Erfassung von Daten umfassenden mobilen Gerät (16) eine Kennung (40) des Haushaltsgerätes (10) erfasst wird, derart, dass zur Ientifikation des Haushaltsgerätes mit der Kamera (36) ein signifikanter Teil des Haushaltsgerätes (10), z.B. das Bedienfeld mit einer üblicherweise charakteristischen Anordnung von Anzeige- und Bedienelementen, oder aber ein Bereich des Haushaltsgerätes (10), der eine üblicherweise an dessen Außenseite vorgesehene Typenkennung oder dergleichen aufweist, aufgenommen und durch Interpretation der so erfassten Bilddaten eine das Haushaltsgerät (10) identifizierende Kennung abgeleitet wird, wobei mit der Kennung (40) und mit dem mobilen Gerät (16) ein Zugriff auf eine im Internet (18) erreichbare Datenbasis (20) erfolgt sowie ein oder mehrere Haushaltsgerätprogramme (22) ausgewählt und zum mobilen Gerät (16) übertragen werden und
wobei das oder jedes zum mobilen Gerät (16) übertragene Haushaltsgerätprogramm (22) in den Speicher (26) des Haushaltsgerätes transferiert wird.

2. Verfahren zum Betreiben eines Haushaltsgerätes (10), wie Waschautomat, Trockner, Geschirrspüler, Gargerät oder Getränkebereiter,
wobei das Haushaltsgerät (10) einen Speicher (26) mit einem Steuerungsprogramm (28) und zumindest einem vom Steuerungsprogramm (28) ausführbaren Haushaltsgerätprogramm (22) sowie eine Verarbeitungseinheit (24) zur Ausführung des Steuerungsprogramms (28) umfasst,
**dadurch gekennzeichnet,**
**dass** eine Erfassung einer Kennung (40) des Haushaltsgerätes (10) durch ein RFID-Systems erfolgt, bei dem das Haushaltgerät (10) einen Transponder aufweist und das mobile Gerät (16) zumindest auch als RFID-Lesegerät fungiert, wobei mit der Kennung (40) und mit dem mobilen Gerät (16) ein Zugriff auf eine im Internet (18) erreichbare Datenbasis (20) erfolgt sowie ein oder mehrere Haushaltsgerätprogramme (22) ausgewählt und zum mobilen Gerät (16) übertragen werden und
wobei das oder jedes zum mobilen Gerät (16) übertragene Haushaltsgerätprogramm (22) in den Speicher (26) des Haushaltsgerätes transferiert wird.

3. Verfahren nach Anspruch 1, wobei die Kennung (40) des Haushaltsgerätes (10) als Barcode oder Smartcode an einer mit dem mobilen Gerät (16) zugänglichen Stelle des Haushaltsgerätes (10) vorliegt und mit dem mobilen Gerät (16) erfasst und interpretiert wird.

4. Verfahren nach Anspruch 2 oder 3, wobei die Kennung (40) in dem mobilen Gerät (16) dauerhaft gespeichert wird und einen wiederholten Zugriff auf die Datenbasis (20) erlaubt.

5. Verfahren nach Anspruch 1, 2, 3 oder 4, wobei zum Transfer eines zum mobilen Gerät (16) übertragenen Haushaltsgerätprogramms (22) in den Speicher (26) des Haushaltsgerätes (10) eine temporäre leitungslose oder leitungsgebundene kommunikative Verbindung zwischen mobilem Gerät (16) und Haushaltsgerät (10) hergestellt wird.

6. Verfahren nach Anspruch 5, wobei zur kommunikativen Verbindung zwischen mobilem Gerät (16) und Haushaltsgerät (10) das Haushaltsgerät (10) und das mobile Gerät (16) mit einem Datenkabel (42) verbunden werden.

7. Verfahren nach Anspruch 5, wobei zur kommunikativen Verbindung zwischen mobilem Gerät (16) und Haushaltsgerät (10) mit dem Haushaltsgerät (10) eine Sender-Empfänger-Kombination (44) zur leitungslosen Datenübertragung verbunden wird und wobei das Haushaltsgerät (10) über die Sender-Empfänger-Kombination (44) mit dem mobilen Gerät (16) leitungslos kommunikativ verbunden wird.

8. System mit einem Haushaltsgerät (10) und einem mobilen Gerät (16), wobei Haushaltsgerät (10) und mobiles Gerät Mittel zur Ausführung des Verfahrens nach einem der Ansprüche 1 bis 7 umfassen.

9. System nach Anspruch 8, mit einem mit dem Haushaltsgerät (10) und dem mobilen Gerät (16) verbindbaren Datenkabel (42) und/oder einer mit dem Haushaltsgerät (10) verbindbaren Sender-Empfänger-Kombination (44) zur kommunikativen Verbindung von Haushaltsgerät (10) und mobilem Gerät (16).

10. Computerprogramm mit Programmcode-Mitteln, um alle Schritte von jedem beliebigen der Ansprüche 1 bis 7 auszuführen, wenn das Computerprogramm durch eine Verarbeitungseinheit (30) eines mobilen Geräts (16) ausgeführt wird.

11. Digitales Speichermedium mit elektronisch auslesbaren Steuersignalen, die so mit einer Verarbeitungseinheit (30) eines mobilen Geräts (16) zusammenwirken können, dass ein Verfahren nach einem der Ansprüche 1 bis 7 ausgeführt wird.

12. Mobiles Gerät (16) mit einer Verarbeitungseinheit (30) und einem Speicher (32), in dem ein Computerprogramm nach Anspruch 10 geladen ist, das im Betrieb des Gerätes durch die Verarbeitungseinheit (30) ausgeführt wird.

## Claims

1. Method for operating a domestic appliance (10), such as a washing machine,
tumble dryer, dishwasher, cooking appliance or beverage preparation machine,
the domestic appliance (10) comprising a memory (26) having a control program (28),
at least one domestic appliance program (22) which can be executed by the control program (28) and a processing unit (24) for executing the control program (28), **characterised in that**,
using a mobile device (16) comprising at least one camera (36) for detecting data, an identifier (40) of the domestic appliance (10) is detected in such a way that, in order to identify the domestic appliance using the camera (36), a significant part of the domestic appliance (10), e.g. the control panel having a typically characteristic arrangement of display and control elements, or a region of the domestic appliance (10), which has a model identifier or the like typically provided on its external side, is recorded and an identifier, which identifies the domestic appliance (10), is derived by interpreting the image data detected in this way, access to a database (20) accessible on the internet (18) being granted using the identifier (40) and the mobile device (16) and one or more domestic appliance programs (22) being selected and transmitted to the mobile device (16) and
the or each domestic appliance program (22) transmitted to the mobile device (16) being transferred to the memory (26) of the domestic appliance.

2. Method for operating a domestic appliance (10), such as a washing machine,
tumble dryer, dishwasher, cooking appliance or beverage preparation machine,
the domestic appliance (10) comprising a memory (26) having a control program (28),
at least one domestic appliance program (22) which can be executed by the control program (28) and a processing unit (24) for executing the control program (28), **characterised in that**
an identifier (40) of the domestic appliance (10) is detected by an RFID system in which the domestic appliance (10) has a transponder and the mobile device (16) at least also functions as an RFID reader,
access to a database (20) accessible on the internet (18) being granted using the identifier (40) and the mobile device (16) and one or more domestic appliance programs (22) being selected and transmitted to the mobile device (16) and
the or each domestic appliance program (22) transmitted to the mobile device (16) being transferred into the memory (26) of the domestic appliance.

3. Method according to claim 1, wherein the identifier (40) of the domestic appliance (10) is provided as a barcode or QR code at a point on the domestic appliance (10) which can be accessed with the mobile device (16), and which identifier can be detected and interpreted by the mobile device (16).

4. Method according to either claim 2 or claim 3, wherein the identifier (40) is permanently stored in the mobile device (16) and allows repeated access to the database (20).

5. Method according to any of claims 1 to 4, wherein a temporary wireless or wired communicative connection is established between the mobile device (16) and the domestic appliance (10) to transfer a domestic appliance program (22) transmitted to the mobile device (16) into the memory (26) of the domestic appliance (10).

6. Method according to claim 5, wherein the domestic appliance (10) and the mobile device (16) are connected to a data cable (42) for communicatively connecting the mobile device (16) and the domestic appliance (10).

7. Method according to claim 5, wherein a transmitter-receiver combination (44) for wireless data transmission is connected to the domestic appliance (10) for communicatively connecting the mobile device (16) and the domestic appliance (10) and wherein the domestic appliance (10) is wirelessly communicatively connected to the mobile device (16) via the transmitter-receiver combination (44).

8. System comprising a domestic appliance (10) and a mobile device (16), wherein the domestic appliance (10) and the mobile device comprise means for carrying out the method according to any of claims 1 to 7.

9. System according to claim 8, comprising, to communicatively connect the domestic appliance (10) and mobile device (16), a data cable (42) which can be connected to the domestic appliance (10) and the mobile device (16) and/or a transmitter-receiver combination (44) which can be connected to the domestic appliance (10).

10. Computer program comprising program code means to carry out all the steps of any of claims 1 to 7, if the computer program is executed by a processing unit (30) of a mobile device (16).

11. Digital storage medium comprising electronically readable control signals which can interact with a processing unit (30) of a mobile device (16) such that a method according to any of claims 1 to 7 is carried out.

12. Mobile device (16) comprising a processing unit (30) and a memory (32), on which a computer program according to claim 10 is loaded, which program is executed by the processing unit (30) during operation of the device.

## Revendications

1. Procédé de fonctionnement d'un appareil électroménager (10) tel qu'une machine à laver automatique, un sécheur, un lave-vaisselle, un appareil de cuisson ou un distributeur de boissons,
l'appareil électroménager (10) comprenant une mémoire (26) avec un programme de commande (28) et avec au moins un programme d'appareil électroménager (22) pouvant être exécuté par le programme de commande (28), et comprenant également une unité de traitement (24) pour l'exécution du programme de commande (28),
**caractérisé en ce que**,
avec un appareil mobile (16) comprenant au moins une caméra (36) pour la captation de données, un identifiant (40) de l'appareil électroménager (10) est capté de telle sorte que, pour l'identification de l'appareil électroménager avec la caméra (36), une partie importante de l'appareil électroménager (10), par exemple le panneau de commande avec une disposition habituellement caractéristique d'éléments d'affichage et de commande, ou bien encore une zone de l'appareil électroménager (10) qui présente une identification de type ou similaire prévue habituellement sur son côté extérieur, est captée, et un identifiant qui identifie l'appareil électroménager (10) est dérivé par l'interprétation des données images ainsi captées, un accès à une base de données (20) pouvant être atteinte sur Internet (18) étant effectué avec l'identifiant (40) et avec l'appareil mobile (16), et un ou plusieurs programmes d'appareil électroménager (22) étant sélectionnés et transmis à l'appareil mobile (16), et
le programme d'appareil électroménager (22) ou chacun d'eux transmis à l'appareil mobile (16) étant transféré dans la mémoire (26) de l'appareil électroménager.

2. Procédé de fonctionnement d'un appareil électroménager (10) tel qu'une machine à laver automatique, un sécheur, un lave-vaisselle, un appareil de cuisson ou un distributeur de boissons,
l'appareil électroménager (10) comprenant une mémoire (26) avec un programme de commande (28) et avec au moins un programme d'appareil électroménager (22) pouvant être exécuté par le programme de commande (28), et comprenant également une unité de traitement (24) pour l'exécution du programme de commande (28),
**caractérisé en ce**
**qu'**une captation d'un identifiant (40) de l'appareil électroménager (10) est effectuée par un système RFID dans lequel l'appareil électroménager (10) présente un transpondeur et l'appareil mobile (16) fonctionne au moins également en tant que lecteur RFID, un accès à une base de données (20) pouvant être atteinte sur Internet (18) étant effectué avec l'identifiant (40) et avec l'appareil mobile (16), et un ou plusieurs programmes d'appareil électroménager (22) étant sélectionnés et transmis à l'appareil mobile (16), et
le programme d'appareil électroménager (22) ou chacun d'eux transmis à l'appareil mobile (16) étant transféré dans la mémoire (26) de l'appareil électroménager.

3. Procédé selon la revendication 1, l'identifiant (40) de l'appareil électroménager (10) se présentant sous la forme de code-barres ou de smartcode à un endroit de l'appareil électroménager (10) qui est accessible avec l'appareil mobile (16), et étant capté avec l'appareil mobile (16) et interprété.

4. Procédé selon la revendication 2 ou 3, l'identifiant (40) étant enregistré durablement dans l'appareil mobile (16) et permettant un accès répété à la base de données (20).

5. Procédé selon la revendication 1, 2, 3 ou 4, une liaison de communication temporaire sans fil ou filaire étant établie entre l'appareil mobile (16) et l'appareil électroménager (10) pour le transfert, dans la mémoire (26) de l'appareil électroménager (10), d'un programme d'appareil électroménager (22) transmis à l'appareil mobile (16).

6. Procédé selon la revendication 5, l'appareil électroménager (10) et l'appareil mobile (16) étant raccordés par un câble de données (42) pour la liaison de communication entre l'appareil mobile (16) et l'appareil électroménager (10).

7. Procédé selon la revendication 5, une combinaison émetteur-récepteur (44) destinée à la transmission de données sans fil étant raccordée à l'appareil électroménager (10) en vue de la liaison de communication entre l'appareil mobile (16) et l'appareil électroménager (10), et l'appareil électroménager (10) étant, par le biais de la combinaison émetteur-récepteur (44), raccordé à l'appareil mobile (16) dans une liaison de communication sans fil.

8. Système avec un appareil électroménager (10) et un appareil mobile (16), l'appareil électroménager (10) et l'appareil mobile comprenant des moyens pour l'exécution du procédé selon une des revendications 1 à 7.

9. Système selon la revendication 8, avec un câble de données (42) pouvant être raccordé à l'appareil électroménager (10) et à l'appareil mobile (16) et/ou avec une combinaison émetteur-récepteur (44) pouvant être raccordée à l'appareil électroménager (10) pour la liaison de communication de l'appareil électroménager (10) et de l'appareil mobile (16).

10. Programme informatique avec des moyens de code de programme afin d'exécuter toutes les étapes de n'importe laquelle des revendications 1 à 7 quand le programme informatique est exécuté par une unité de traitement (30) d'un appareil mobile (16).

11. Support de mémoire numérique avec des signaux de commande lisibles électroniquement qui peuvent coopérer avec une unité de traitement (30) d'un appareil mobile (16) de telle sorte qu'un procédé selon une des revendications 1 à 7 peut être exécuté.

12. Appareil mobile (16) avec une unité de traitement (30) et une mémoire (32) dans lequel un programme informatique selon la revendication 10 est chargé et est exécuté pendant le fonctionnement de l'appareil par l'unité de traitement (30).
